# EUROPEAN PATENT SPECIFICATION

(11) **EP 1 367 883 B1**
(45) Date of publication and mention of the grant of the patent: **31.08.2005**
(21) Application number: 02750531.2
(22) Date of filing: 28.02.2002
(51) Int. Cl.: A01K 1/01

(54) **CAT LAVATORY**
KATZENKLO
BAC SANITAIRE POUR CHAT

(30) Priority: 14.03.2001 DE 10112128
(43) Date of publication of application: 10.12.2003
(73) Proprietor: Mars, Inc., McLean, VA 22101-3883 (US)
(72) Inventor: LANGE, Dietmar, 56179 Vallendar (DE)
(74) Representative: Winkler, Andreas Fritz Ernst
(86) International application number: PCT/EP2002/002196
(87) International publication number: WO 2002/071837

(56) References cited:
- FR-A- 2 602 744
- GB-A- 2 302 533
- GB-A- 2 346 791
- US-A- 3 771 493
- US-A- 4 117 184
- US-A- 4 840 140
- US-A- 4 869 204
- US-A- 4 934 316
- US-A- 5 249 550
- US-A- 5 850 798

## Description

The invention relates to a cat lavatory according to the preamble of claim 1.

It is a well-known fact that cats can easily be trained to deposit urine arid faeces in a container provided for that purpose. In a simple embodiment, this container is filled with a porous, absorbent and, advantageously, odour-inhibiting material, known as cat litter. Cat litter needs to be replaced regularly. Cleaning a cat lavatory of this kind is time-consuming and unpleasant, however, since it is possible for the lavatory walls to be soiled or for there to be litter adhering to the lavatory walls. In addition, large amounts of litter need to be disposed of each time, because the litter ought to be 6 to 8 cm (2 to 3 ins.) deep on average, and the amount of litter consumed is, as a rule, greater than is actually necessary. In addition, simply tipping the contents of the cat lavatory into the dustbin or the like is also unhygienic, and problems associated with dust and odours are inevitable in the process.

Cat lavatories are known in the state of the art in which a resealable bag filled with cat litter can be placed into the cat lavatory container. This bag can be sealed after use and disposed of in a simple manner with the household waste.

DE 36 22 528 C2, for example, teaches a cat lavatory consisting of a disposable soft package made of flexible material with a receptacle space which is closed on all sides and contains one hygienic litter filling. So that the package can be used, the top side of the receptacle space can be opened and the top of the package tom open to reveal the contents. After use, the cat lavatory consisting of the disposable soft package can be disposed of in a closed state.

DE 35 39 637 A1 discloses a cat lavatory with a lower part and a replaceable bag filled with cat litter which can be placed in the lower part. The bag here is designed in such a way that the top end portions of the bag can be slipped over the upper peripheral edge of the cat lavatory and attached so that soiling of the lavatory container is avoided. After use, the bag is sealed with the aid of a closure means and the soiled cat litter can be disposed of securely.

A cat lavatory is also known from US 3,771,493, which comprises a container with a liner suitable for insertion into said container in the form, for example, of a polyethylene film. Cat litter is scattered into said liner and, after use, can be removed from the container together with the liner and disposed of.

A disadvantage of the cat lavatories known from the prior art, however, is the extremely high consumption of litter, because the litter in the cat lavatory needs to be sufficiently deep, in particular in order to absorb large quantities of urine and faeces and to prevent soiling of the lavatory walls. The consumption of litter is, as a rule, greater than is really necessary. This in turn involves the cat owner's constantly having to buy and transport heavy sacks of litter, which also involves great effort and expense. Corresponding to the large amount of litter needed, large amounts of litter also need to be disposed of. That, too, involves greater effort and, at times when rubbish disposal charges are high, is likewise very cost-intensive.

US 4,840,140 discloses a combination of a litter device for use with cats which has a sorbent pad laminate for the collection of animal urine consisting of a bottom sheet layer of moisture impermeable material in contact with the base and walls of the litter device, an intermediate sorbent layer of material having a high absorbency capacity for urine, a top claw-resistant screen and securing device. The securing device removably affixes the sorbent pad laminate to the litter device, thereby preventing the relative movement between the sorbent pad and the litter device which can be caused by the clawing action of an animal.

US 5,850,798 discloses a liner for a cat box having sides extending upwardly from a bottom to a vertical height. The liner comprises a bag for placement in the cat box. The bag comprises a bottom portion for lining the cat, and a contiguous top portion. A fluid-impermeable layer is placed within the box, located within the bottom portion of the bag and bonded to the bag. A sorbent layer is placed above the fluid-impermeable layer.

From US 4,934,316 a litter box liner is known comprising a rectangular absorbent pad having a waterproof backing sheet provided with absorbent material thereon. Glue lines or spots are provided on the top face thereof for holding the liner in a box-like configuration conforming to the contours of the litter box. Other glue lines or spots are provided on the bottom surface of the backing sheet for adhesively bonding the liner with the litter box.

It is the object of the present invention to develop the generic cat lavatory further such that the disadvantages of the prior art are overcome, especially so that a cat lavatory is provided which may be fast and easily inserted into a lower part of a cat lavatory and which may be easily transported and stored.

In accordance with the invention, this object is achieved by the cat lavatory of claim 1 layer of non-woven material.

In accordance with the invention, it is envisaged that the lining layer of non-woven material should comprise a highly absorbent material.

Preferably, the lining layer of non-woven material comprises an odour-binding material.

In a particularly preferred embodiment, it is envisaged that the lining layer of non-woven material should be scratch-proof, at least on its upper surface.

In accordance with the invention, it is also proposed that the external dimensions of the lining layer of non-woven material should correspond in form substantially to the internal dimensions of the lower part.

It is also preferred, according to the invention, that the lining layer of non-woven material should be between 0·1 and 1 cm thick, preferably 0·5 cm.

In accordance with the invention, it is further envisaged that the layer of litter should be between 1 and 3 cm, preferably 2 cm, thick.

It is also proposed, according to the invention, that the lower part should be in the shape of an open, rectangular bowl.

In accordance with the invention, it can also be provided for the container to be capable of being opened in such a way that its top extremities, after it is placed in the lower part, can be slipped over the upper peripheral edge of the lower part and, after the period of use is finished, folded together again for resealing.

In this context, it can be provided for the extremity of the container to be attachable to the upper peripheral edge of the lower part.

In addition, one embodiment of the invention is characterised by having an upper part which can be removably placed on the lower part after the extremities of the container have been folded out, said upper part covering the upper peripheral edge of the lower part and securing the folded out extremities of the container on the upper peripheral edge of the lower part.

In accordance with the invention, it is envisaged that the upper part should be designed in the form of a rectangular frame.

A cat lavatory of the invention can also be characterised by having at least one closure means for resealing the container after use.

In this context, it can be provided for the closure means to comprise adhesive strips or a tape.

A further embodiment of the invention is characterised by having a separate storage box for holding a number of containers.

In this context, a cover can be provided on the storage box with an opening for removal.

Finally, in accordance with the invention, it is preferred for the tubular bags to be provided in the storage box in the form of a supply roll and for them to be separable by means of a tearing strip and individually removable via the removal opening.

The invention is thus based on the surprising finding that, by using a highly absorbent lining layer of non-woven material, which is preferably odour-binding and - at least in its upper layer - scratch-proof, in a cat lavatory of the invention, the consumption of litter can be drastically reduced. Because of the special packaging concept for the lining layer of non-woven material, it is not possible for the lavatory walls to be soiled, which considerably simplifies the cleaning of the cat lavatory. Advantageously, when the concept of the invention is used, the consumption of litter is reduced by as much as 60 to 70 per cent, because the liquid is substantially absorbed by the lining layer of non-woven material. The main purpose of the litter, in this case, is merely to satisfy the cat's instinctive need to scratch. Furthermore, the lining layer of non-woven material is considerably lighter than a comparable volume of litter. The amount to be disposed of is also reduced substantially. Using the cat lavatory according to the present invention, reliable feline hygiene can be provided for at least one week with one tubular bag unit.

In a particular embodiment of the cat lavatory of the invention, the provision of a separate storage box for containers or tubular bags, attached to the cat lavatory, facilitates the preparation of the cat lavatory even more, since the containers or tubular bags can be removed individually, straight from a supply roll for example, and placed directly into the lower part of the cat lavatory.

In the cat lavatory of the invention, the container or tubular bag already comprises cat litter,

The container or tubular hose of the cat lavatory of the invention also makes it possible for it to be attached securely and stably to the lower part of the cat lavatory, thus preventing it from slipping, which might possibly lead to soiling of the walls of the lower part.

It will be apparent that the lavatory of the invention can also be used for a wide variety of other pets.

Because of the low transport weight and volume, it is possible to provide containers or tubular bags for sale in the form of double packs or multi-packs.

There might be provision for the container to comprise a folding pack that forms a packaging container which is stable in shape and which can be unfolded for use and placed in the lower part of the cat lavatory. The advantage of this kind is that the folding pack serves as a (packaging) container for the absorbent liner in the form of the lining layer of non-woven material (with or without a tubular bag surrounding it) and that it can be marketed in this form as a sales unit. For this purpose, it is particularly advantageous if the folding pack is stackable and if it is substantially cuboid in shape. It is convenient for the folding pack to be made from a blank of paper, paperboard, cardboard, light plastic, composite material or some absorbent material which is planar in its initial condition.

The folding pack will preferably have a central, preferably substantially rectangular floor portion, against which preferably rectangular wall portions abut.

It is convenient for there to be corner portions disposed between adjacent wall portions, it being possible for said corner portions to be resting against said wall portions when folded up, so that a substantially cuboid receptacle space for absorbent material is formed.

Abutting the wall or corner portions there will preferably be lid portions. Lid portions will preferably abut both the wall and the corner portions, so that the lid portions overlap one another several times when the folding pack is folded up. It is convenient for the lid portions to be substantially rectangular.

There may be handle portions abutting the lid portions. The handle portions can be folded to lie flat on the lid portions or to project away from them. In addition, there can be provision for the handle portions to be designed such that they overlap several times, e.g. four, six or eight times, so that they form a stable handle for the folding pack which is capable of bearing loads and which has no tendency to tear prematurely.

It is convenient for this version too to have at least one closure means for resealing the folding pack after use. For this purpose, it is possible to provide something such as a drawstring (or a piece of elastic or the like), which can, for example, engage through holes provided in the edge portion of the folding pack.

Preferably, the folding pack will be arranged so that it can be folded apart in such a way that its outer edge portion, after being placed in the lower part, can be folded over an upper peripheral edge of the lower part. In this case, said edge portion of the folding pack can be attachable to the upper peripheral edge of the cat lavatory. For this purpose, a top part can be provided which can be removably placed on top of the lower part in order to secure the folded-over edge portion of the folding pack on the upper peripheral edge of the lower part. The top part can be designed in the form of a frame adapted to the shape of the lower part.

Further features and advantages of the invention can be learnt from the following detailed description, in which one embodiment of the cat lavatory of the invention is explained in detail with reference to drawings, in which
- Figure 1: shows a perspective view of a cat lavatory of the invention with a tubular bag to be placed in it;
- Figure 2: shows a cross-section through a tubular bag according to the invention in its closed state;
- Figure 3: shows a cross-section through the tubular bag of the invention placed in a container of the cat lavatory, in its opened state;
- Figure 4: shows a perspective view of a cat lavatory of the invention with a tubular bag in its opened state;
- Figure 5: shows a cross-section through the cat lavatory of the invention with an upper part placed on it;
- Figure 6: shows a section of the edge portion of the cat lavatory of the invention from Figure 5;
- Figure 7: shows a perspective, exploded view of the cat lavatory of the invention with the upper part;
- Figure 8: shows a perspective view of the assembled cat lavatory of the invention in use;
- Figures 9a, 9b: show perspective views illustrating how to dismantle the cat lavatory and remove the tubular bag;
- Figure 10: shows a second embodiment of the cat lavatory of the invention in an exploded view;
- Figures 11a,: 11b show perspective views illustrating how to insert a tubular bag into the cat lavatory of Figure 10;
- Figure 12: shows a perspective view of the cat lavatory of Figure 10 with the upper part in the state when it is lined with a tubular bag;
- Figure 13: shows a perspective view illustrating how to fill the cat lavatory shown in Figure 10 with cat litter;
- Figure 14: shows a perspective view illustrating how to remove a tubular bag from the cat lavatory of Figure 10;
- Figure 15: shows a perspective view illustrating a folding pack in the folded-up state;
- Figure 16: shows the folding pack of Fig. 15 in a partially unfolded state;
- Figure 17: shows the folding pack in a more unfolded state;

- Figure 18: shows the folding pack in a substantially completely unfolded state and placed in a trough-like lower part of a cat lavatory, and
- Figure 19: shows a blank with fold lines to make a folding pack according to Figs. 15-18.

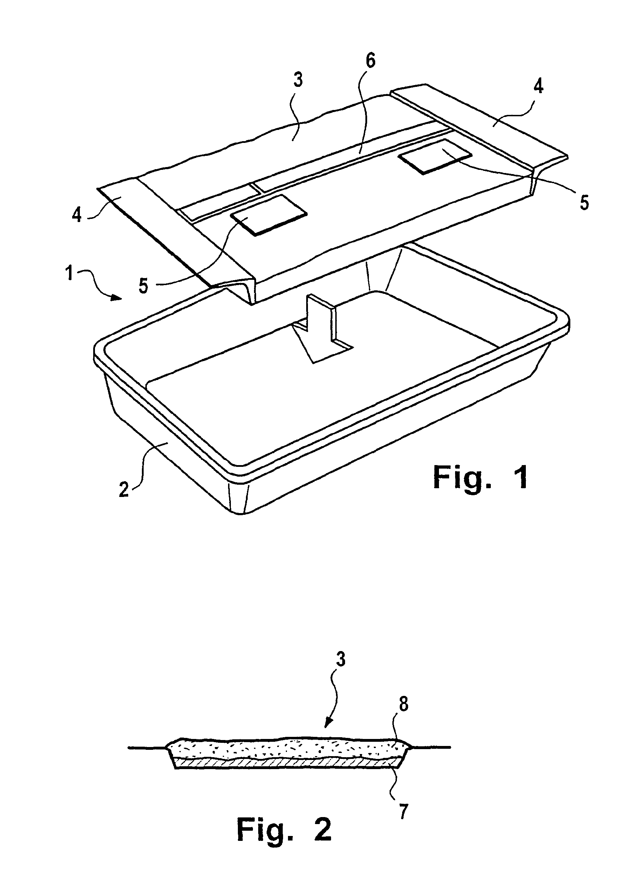

Figure 1 shows a first embodiment of a cat lavatory 1 of the invention, comprising a lower part 2 into which a tubular bag 3 can be inserted. On its transverse sides, the tubular bag 3 has broad edge portions 4 for lining the lateral peripheral edges of the lower part 2. Closure means 5, such as adhesive strips, are provided on the upper side of the tubular bag 3, and there is a longitudinal opening 6, such as a resealable adhesive seam, located centrally on the upper side of the tubular bag 3 and extending over the entire length of the tubular bag 3.

Figure 2 shows a cross-section through a tubular bag 3 for use in the cat lavatory 1 of the invention. This tubular bag 3 is vacuum-sealed, which very much minimises the amount of space taken up by the tubular bag 3. The tubular bag 3, which can be made from a plastic film, such as polyethylene, comprises a lining layer of non-woven material 7 on its bottom inner side made of an extremely absorbent, odour-binding and scratch-proof material. The lining layer of non-woven material 7 is preferably 0·5 cm thick. A layer of litter 8, preferably 2 cm thick, is scattered on top of the lining layer of non-woven material.

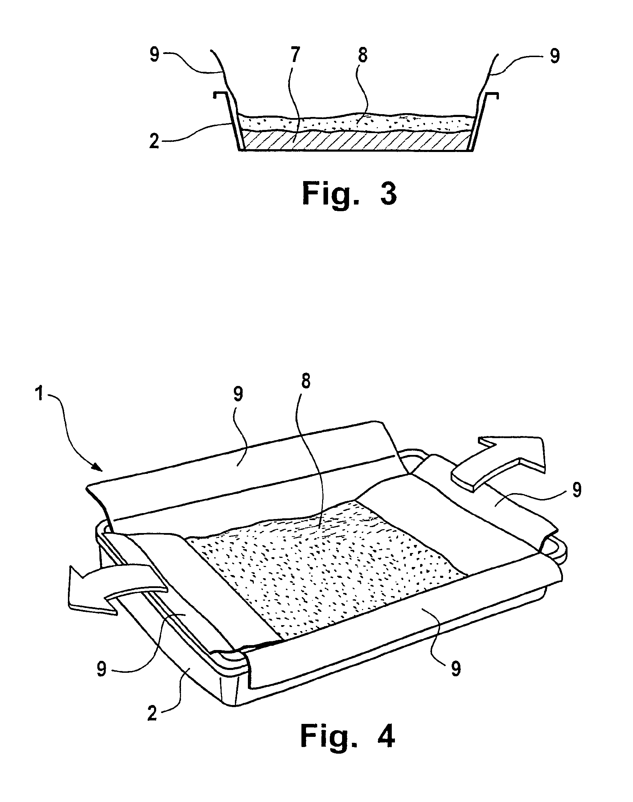

When the tubular bag 3 is opened, it is unfolded along the longitudinal opening 6, which is shown in Figure 1, the end portions 9 of the tubular bag 3 being suitable for folding over the upper peripheral edge of the lower part 2, as is shown in Figures 3 and 4. When the tubular bag 3 is opened, air flows into the lining layer of non-woven material 7, so that this can result in a slight increase in its volume.

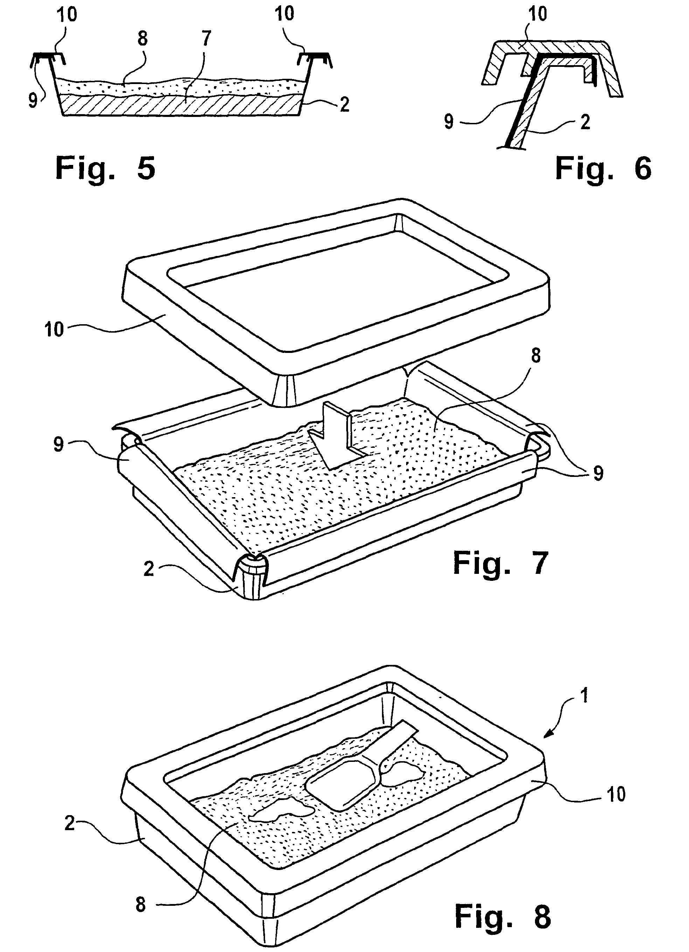

Figure 5 shows the tubular bag 3 in its opened state inserted into the lower part 2, the end portions 9 of the tubular bag 3 having been folded over the upper peripheral edges of the lower part. The end portions 9 of the tubular bag 3 which have been folded over can be securely and stably attached to the circumferential walls of the lower part 2 in order to prevent the tubular bag 3 from slipping within the cat lavatory 1. Other possible methods of attachment, such as attachment by means of releasable adhesive strips and the like, will, however, be readily apparent to a man skilled in this art.

The attachment of the tubular bag 3 to the lower part 2 by means of the upper part 10 is shown in detail in Figure 6. The upper part 10 preferably has the shape of a rectangular frame in this case, which can be placed over the lower part 2 and the end portions 9 of the tubular bag 3, as shown in Figure 7.

A cat lavatory 1 fitted together completely is shown in Figure 8. When the cat lavatory of the invention is used, soiled litter can be removed every day, the interior of the lining layer of non-woven material 7 immediately absorbing any moisture and binding both said moisture and any odours arising. Liquid can no longer escape from the lining layer of non-woven material 7.

The cat lavatory 1 of the invention provides reliable feline hygiene for at least one week.

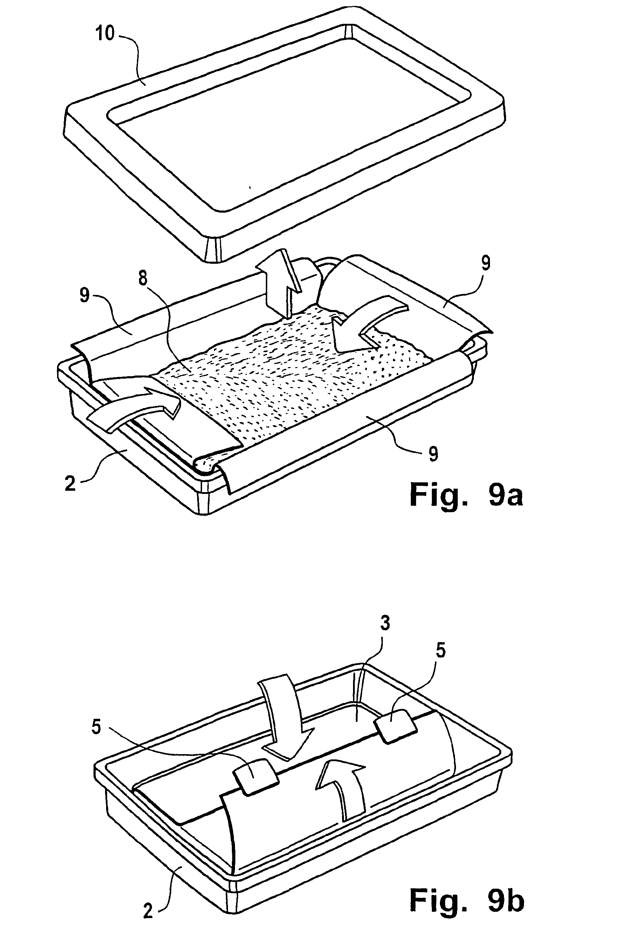

In order to replace the tubular bag 3 from the cat lavatory 1, the upper part 10 is first removed, then the end portions 9 of the tubular bag are folded inwards, and the tubular bag 3 is sealed again with the closure means 5, as illustrated in Figures 9a and 9b.

A tubular bag 3 sealed in this way can be simply disposed of without soiling the cat lavatory 1 or causing dust and odour problems.

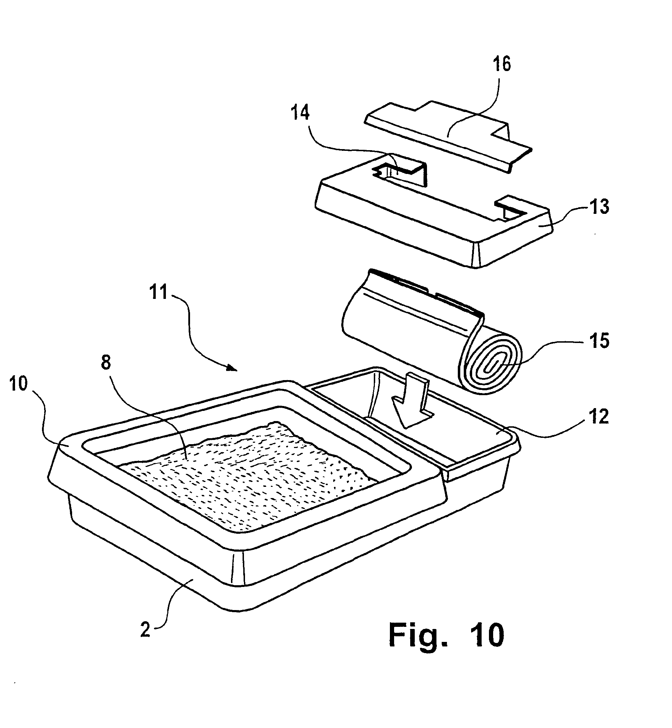

Figure 10 shows an exploded view of a second embodiment 11 of the cat lavatory of the invention. The cat lavatory according to Figure 10 additionally comprises a storage box 12 with a cover 13 which has a removal opening 14. The storage box 12 can hold a number of tubular bags 3. In particular, it is conceivable for the tubular bags 3 to be separated from a supply roll 16 and removed individually by means of a tearing strip 15.

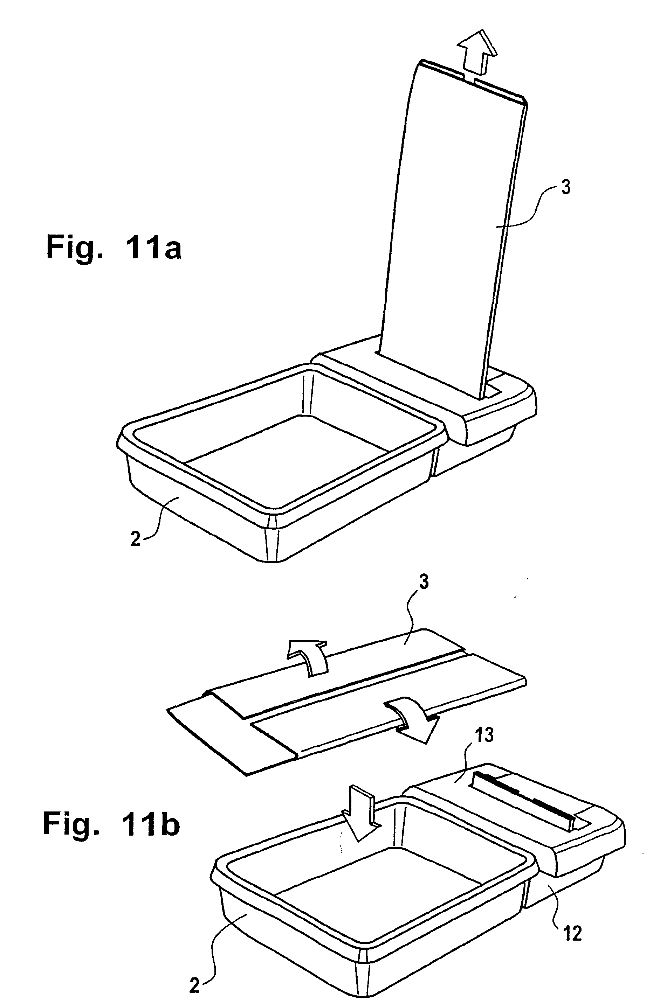

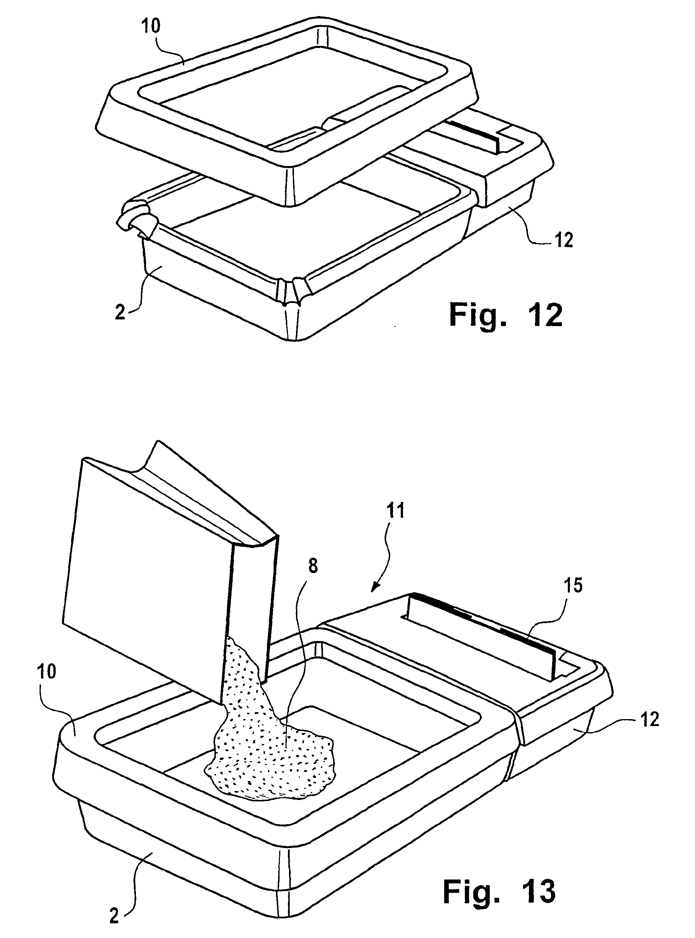

The removal of a tubular bag 3 from the supply roll 15 from the storage box 12 and the way it is placed in the lower part 2 are shown in Figures 11a and 11b. A tubular bag film of the appropriate length is torn off the roll and placed in the lower part 2 of the cat lavatory 11. The end portions 9 of the tubular bag 3 can again be securely attached to the lower part 2 by means of the upper part 10, as shown in Figure 12. The cat lavatory prepared in this way can subsequently be lightly scattered with cat litter, whereby, compared to a conventional cat lavatory which only comprises cat litter, it is possible to reduce the amount of litter by 60 to 70 per cent by using the highly absorbent and odour-binding lining layer of non-woven material 7. Figure 13 shows how litter 8 is scattered in.

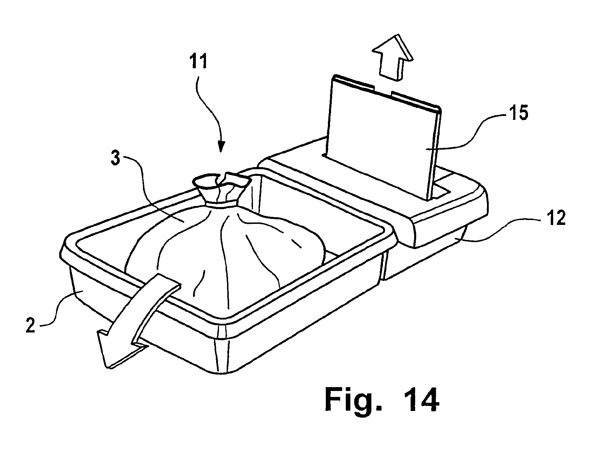

Figure 14 shows how the tubular bag 3 is removed from the cat lavatory 11, the upper part 10 having first been removed again. After that, the end portions 9 of the tubular bag 3 can be folded together and sealed with a closure means 5, in this case with a tape, for example, and the tubular bag 3 can be disposed of with no problem.

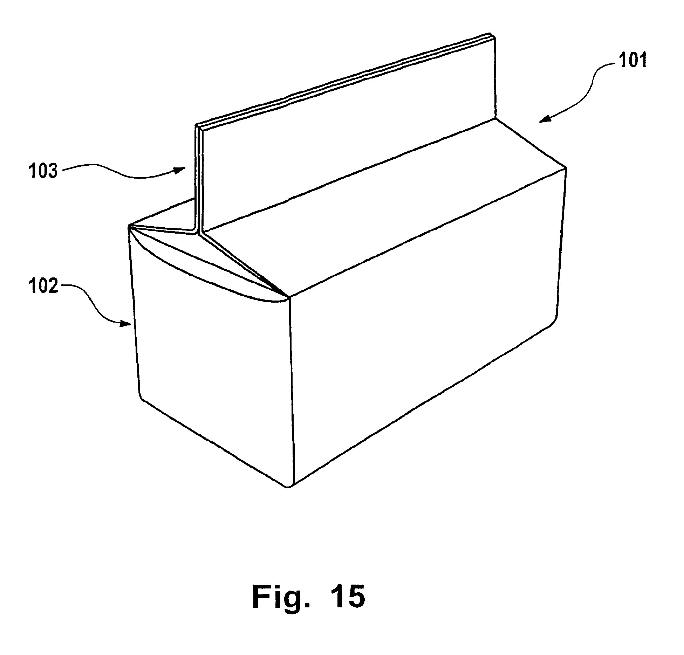

A cat lavatory 111 will now be described with reference to Figures 15 to 19, where a lining layer of non-woven material (optionally covered in a tubular bag) and optionally additional litter material are placed in a folding pack. The cat lavatory 111 illustrated in Figures 15 to 19 is not an embodiment of the invention and does not form part thereof.

Fig. 15 shows a folding pack indicated in its entirety by 101 in a closed state, in which it forms a dimensionally stable packaging container; it can be marketed in this form as a sales unit. The folding pack 101 has a substantially cuboid packaging body 102 with a handle portion extending upwards 103, the handle portion 103 being capable of being folded over horizontally for the purpose of stacking two or more folding packs 101 on top of one another. The folding pack 101 is made by folding, in a manner that will be explained, from a blank of a suitable material, which may be paper, paperboard, cardboard, plastic, some absorbent material or a composite material (e.g. painted cardboard or cardboard coated with plastic).

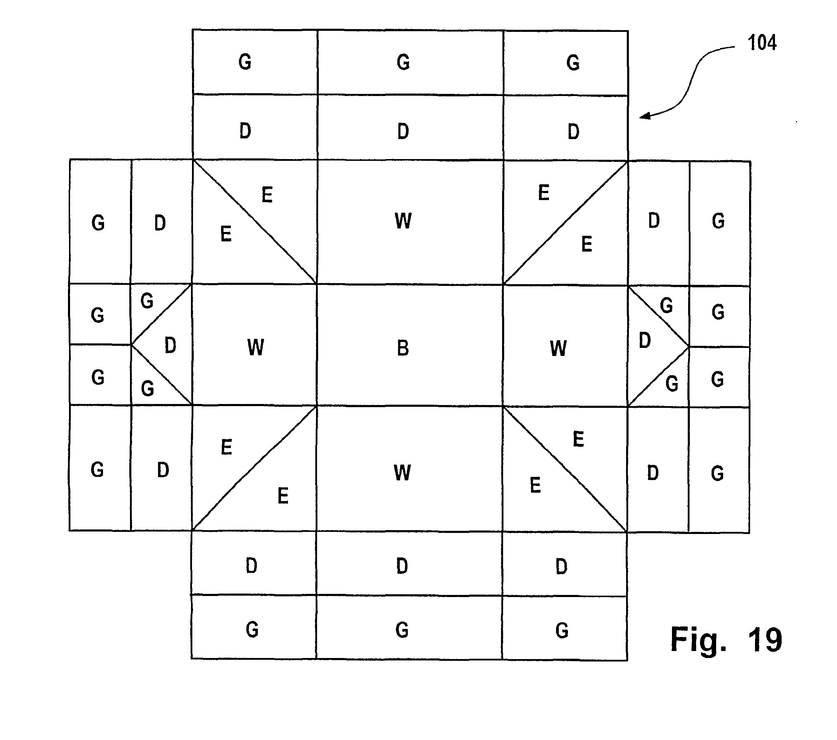

In order to explain the way in which the folding pack is made by being folded together from a blank of material, reference will now be made to Fig. 19, which shows a blank 104 of a suitable material. Inside the surface of the blank 104 there are a central floor portion B, wall portions W abutting it and corner portions E between adjacent wall portions W. Adjoining the wall and corner portions there are lid portions D on the outside, and adjoining these in turn are handle portions G. Between the various portions mentioned there are creases in each case, which are shown in Fig. 19 by solid lines.

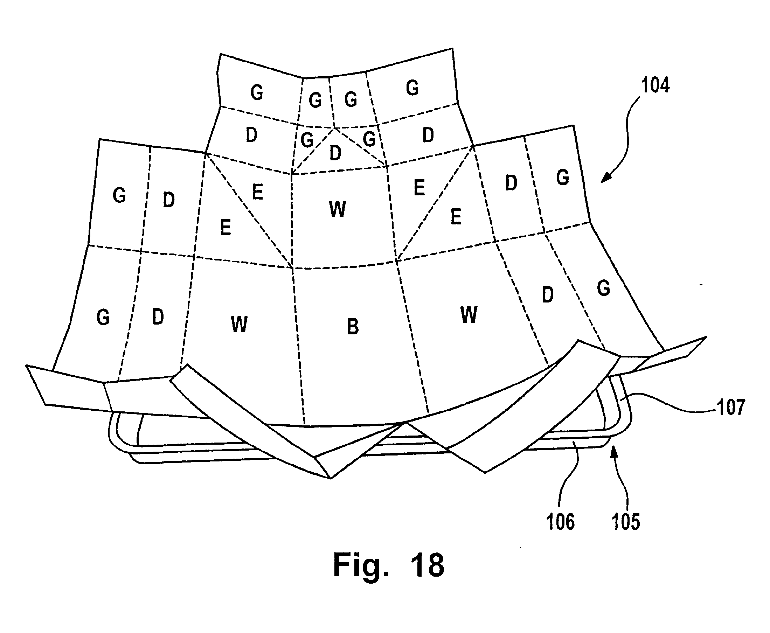

Fig. 18 shows a perspective view of a blank 104 or an opened folding pack 101, the orientation having been rotated by 90° compared to Fig. 19. The opened folding pack is placed on a tray-like or trough-like lower part 105 of a cat lavatory, in which the four areas of the folding pack, which project laterally and form lid and handle portions D, G respectively, can in each case be folded over an edge 107 of the lower part 105, in order to attach them to the lower part to a certain extent. There can be provision for the basic area of the lower part 105 to correspond approximately to the area formed by the floor, wall and corner portions B, W, E of the folding pack, which is rectangular, so that the lateral areas, consisting of lid and handle portions respectively, run first of all upwards along the inner side walls 106 of the lower part and can then be folded sideways and outwards and down over the edge 107. A design of this kind is particularly convenient in connection with a frame-like top part of the cat lavatory, which can be removably placed on the lower part in such a manner that it extends over the side walls or the edge 107 together with the portions D, G of the folding pack folded over.

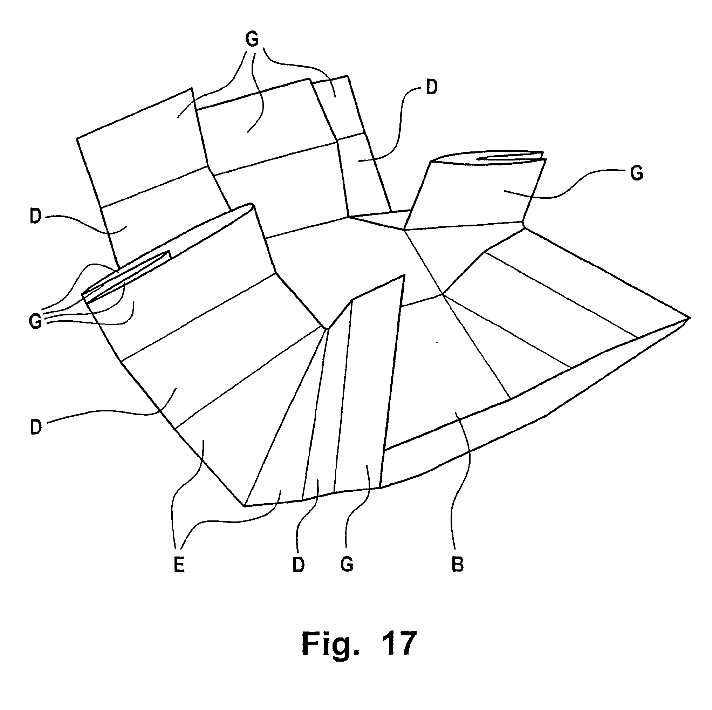

Fig. 17 shows the folding pack in an orientation rotated by about 45° compared to Fig. 18 and in a partially folded-up (or partially opened) state, in which not only the floor portion B, but in particular also the triangular corner portions E and the lid and handle portions D, G can be seen.

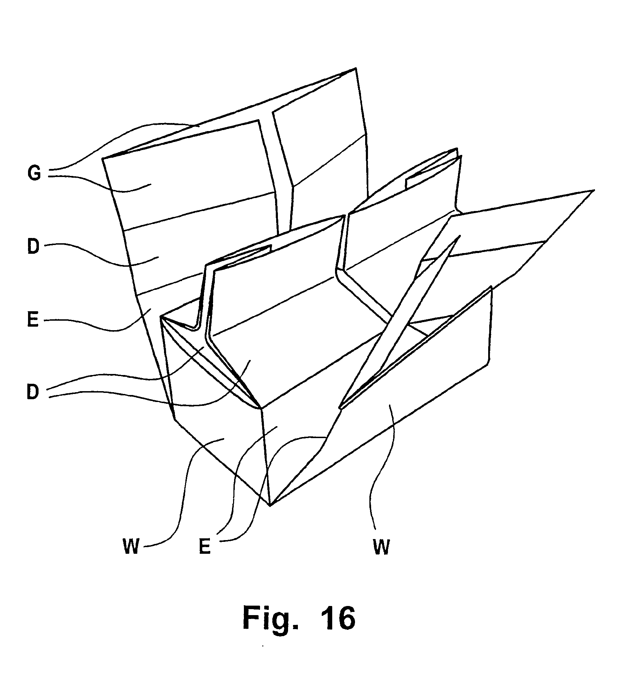

Fig. 16 shows a view corresponding to Fig. 17 in an even more folded-up state, which now also shows the walls W. As one can see, the folded-up corner portions E lie against the walls W, so that a substantially cuboid receptacle space for absorbent material is left in the interior of the folding pack 101.

As can also be seen from the drawings, the handle portion indicated in Fig. 15 by the numeral 103 is formed from handle portions G which overlap each other more than once, and which overlap each other six times and even eight times in the lateral edge regions, so that a stable handle portion capable of bearing loads is formed.

In the initial state as shown in Fig. 15, the folding pack may not only contain the lining layer of non-woven material but may also be filled with a certain amount of absorbent litter material, the quantity of which is chosen such that, in use (Fig. 18), there is a layer of litter material 1 to 3 cm thick over the base area (which preferably corresponds to the area B, W, E) corresponding to the lower part of the cat lavatory. The folding pack or the walls W may be so high that the volume of the folding pack 1 is such that, when it is completely filled (in addition to the lining layer of non-woven material) it can hold a volume of litter material that corresponds to a layer 2 cm thick, for example, on the total base area of a cat lavatory formed by the portions B, W and E. The folding pack 101 can optionally be somewhat larger, in order to form a certain reserve, so that, after use, the used litter material can be held in the folding pack, once it has been folded up again, together with the faeces deposited by the cat.

There can be provision for the lining layer of non-woven material or the tubular bag in the initial state as shown in Fig. 15 to be folded together to a size that corresponds to the floor portion B and which is likewise unfolded when being opened into the position for use (Fig. 18).

After use, i.e. after a period of use that can be up to a week or more, depending on the absorptivity of the material used, the folding pack is folded up together with the lining layer of non-woven material and any litter material that may be present, and restored to a shape corresponding to Fig. 1, in which it can be disposed of simply and hygienically, and without causing dust. Since the handle and lid portions have not come into contact with litter material and/ or cat faeces if, they have been folded over the edge of the cat lavatory, the disposal procedure can be effected extremely hygienically.

The features of the invention disclosed in the above description, in the drawings and in the claims may be essential for carrying out the invention in its various embodiments both individually and in any combination.

## Claims

1. A cat lavatory (1, 11, 111) with a lower part (2) and a container (3) holding an absorbent material that can be inserted into the lower part (2), wherein the container (3) comprises a lining layer of non-woven material (7) and a layer of litter (8) is disposed on the lining layer of non-woven material (7), **characterized in that** the container is formed as a tubular bag (3) and the tubular bag (3) is vacuum-sealed prior to use.

2. A cat lavatory as claimed in Claim 1, **characterised in that** the lining layer of non-woven material (7) comprises a highly absorbent material.

3. A cat lavatory as claimed in either of Claims 1 or 2, **characterised in that** the lining layer of non-woven material (7) comprises an odour-binding material.

4. A cat lavatory as claimed in any of the preceding claims, **characterised in that** the lining layer of non-woven material (7) is scratch-proof, at least on its upper surface.

5. A cat lavatory as claimed in any of the preceding claims, **characterised in that** the lining layer of non-woven material (7) has external dimensions corresponding substantially in shape to the internal dimensions of the lower part (2).

6. A cat lavatory as claimed in any of the preceding claims, **characterised in that** the lining layer of non-woven material (7) is between 0·1 and 1 cm thick, preferably 0·5 cm.

7. A cat lavatory as claimed in any of the preceding claims, **characterised in that** the layer of litter (8) is between 1 and 3 cm, preferably 2 cm, thick.

8. A cat lavatory as claimed in any of the preceding claims, **characterised in that** the lower part (2) is in the shape of an open, rectangular bowl.

9. A cat lavatory as claimed in any of the preceding claims, **characterised in that** the container (3) can be opened in such a way that its top extremities (9) after it is placed in the lower part (2) can be folded out over the upper peripheral edge of the lower part (2) and, after the period of use is finished, folded together again for resealing.

10. A cat lavatory as claimed in Claim 9, **characterised in that** the extremity (9) of the container (3) is attachable to the upper peripheral edge of the lower part (2).

11. A cat lavatory as claimed in either of Claims 9 or 10, **characterised by** having an upper part (10) which can be removably placed on the lower part (2) after the extremities (9) of the container (3) have been folded out, said upper part (10) covering the upper peripheral edge of the lower part (2) and securing the folded out extremities (9) of the container (3) on the upper peripheral edge of the lower part (2).

12. A cat lavatory as claimed in Claim 11, **characterised in that** the upper part (10) is designed in the form of a rectangular frame.

13. A cat lavatory as claimed in any of the preceding claims, **characterised by** having at least one closure means (5) for resealing the container (3) after use.

14. A cat lavatory as claimed in Claim 13, **characterised in that** the closure means (5) comprises adhesive strips or a tape.

15. A cat lavatory as claimed in any of the preceding claims, **characterised by** having a separate storage box (12) for holding a number of containers (3).

16. A cat lavatory as claimed in Claim 15, **characterised by** having a cover (13) on the storage box (12) with an opening (14) for removal.

17. A cat lavatory as claimed in either of Claims 15 or 16, **characterised in that** the tubular bags (3) are provided in the form of a supply roll (15) in the storage box (12) and are separable by means of a tearing strip (16) and individually removable via a removal opening (14).

## Patentansprüche

1. Katzentoilette (1, 11, 111) mit einem Unterteil (2) und einem in das Unterteil einlegbaren Behältnis (3), das ein Absorbensmaterial hält, wobei das Behältnis (3) eine Vlieseinlage (7) umfaßt und eine Schicht aus Streugut (8) auf der Vlieseinlage (7) angeordnet ist, **dadurch gekennzeichnet, daß** das Behältnis durch einen Schlauchbeutel (3) gebildet ist und der Schlauchbeutel (3) vor Verwendung vakuumverschlossen ist.

2. Katzentoilette nach Anspruch 1, **dadurch gekennzeichnet, daß** die Vlieseinlage (7) ein hoch absorbierendes Material umfaßt.

3. Katzentoilette nach Anspruch 1 oder 2, **dadurch gekennzeichnet, daß** die Vlieseinlage (7) ein geruchsbindendes Material umfaßt.

4. Katzentoilette nach einem der vorangehenden Ansprüche, **dadurch gekennzeichnet, daß** die Vlieseinlage (7) zumindest auf ihrer Oberfläche kratzfest ist.

5. Katzentoilette nach einem der vorangehenden Ansprüche, **dadurch gekennzeichnet, daß** die Vlieseinlage (7) eine in ihren Außenabmessungen im wesentlichen den Innenabmessungen des Unterteils (2) entsprechende Form aufweist.

6. Katzentoilette nach einem der vorangehenden Ansprüche, **dadurch gekennzeichnet, daß** die Vlieseinlage (7) eine Dicke von 0,1 bis 1 cm, bevorzugt 0,5 cm aufweist.

7. Katzentoilette nach einem der vorangehenden Ansprüche, **dadurch gekennzeichnet, daß** die Schicht aus Streugut (8) eine Dicke von 1 bis 3 cm, bevorzugt 2 cm aufweist.

8. Katzentoilette nach einem der vorangehenden Ansprüche, **dadurch gekennzeichnet, daß** das Unterteil (2) die Form einer offenen, rechtwinkligen Schale aufweist.

9. Katzentoilette nach einem der vorangehenden Ansprüche, **dadurch gekennzeichnet, daß** das Behältnis (3) so öffenbar ist, daß dessen nach dem Einlegen in das Unterteil (2) obenliegender Abschlußbereich (9) über den oberen Umfangsrand des Unterteils (2) herausstülpbar und nach beendeter Gebrauchsdauer zum Wiederverschließen zusammenlegbar ist.

10. Katzentoilette nach Anspruch 9, **dadurch gekennzeichnet, daß** der Abschlußbereich (9) des Behältnisses (3) an dem oberen Umfangsrand des Unterteils (2) befestigbar ist.

11. Katzentoilette nach einem der Ansprüche 9 oder 10, **gekennzeichnet durch** ein auf das Unterteil (2) nach dem Herausstülpen des Abschlußbereichs (9) des Behältnisses (3) abnehmbar aufsetzbares Oberteil (10) zum Abdecken des oberen Umfangsrandes des Unterteils (2) und zum Sichern des ausgestülpten Abschlußbereichs (9) des Behältnisses (3) auf dem oberen Umfangsrand des Unterteils (2).

12. Katzentoilette nach Anspruch 11, **dadurch gekennzeichnet, daß** das Oberteil (10) in Form eines rechteckigen Rahmens ausgebildet ist.

13. Katzentoilette nach einem der vorangehenden Ansprüche, **gekennzeichnet durch** zumindest ein Verschlußmittel (5) zum Wiederverschließen des Behältnisses (3) nach Gebrauch.

14. Katzentoilette nach Anspruch 13, **dadurch gekennzeichnet, daß** das Verschlußmittel (5) Klebestreifen oder ein Band umfaßt.

15. Katzentoilette nach einem der vorangehenden Ansprüche, **gekennzeichnet durch** eine separate Vorratsbox (12) zur Aufnahme mehrerer Behältnisse (3).

16. Katzentoilette nach Anspruch 15, **gekennzeichnet durch** eine Abdeckung (13) auf der Vorratsbox (12) mit einer Entnahmeöffnung (14).

17. Katzentoilette nach einem der Ansprüche 15 oder 16, **dadurch gekennzeichnet, daß** die Schlauchbeutel (3) in Form einer Vorratsrolle (15) in der Vorratsbox (12) vorliegen und mittels einer Abreißleiste (16) trennbar und über die Entnahmeöffnung (14) einzeln entnehmbar sind.

## Revendications

1. Bac sanitaire pour chat (1, 11, 111) avec une partie inférieure (2) et un récipient (3) contenant un matériau absorbant qui peut être inséré dans la partie inférieure (2), dans lequel le récipient (3) comprend une couche de revêtement en matériau non tissé (7), et une couche de litière (8) est disposée sur la couche de revêtement en matériau non tissé (7), **caractérisé en ce que** le récipient est formé comme un sac tubulaire (3) et le sac tubulaire (3) est soudé sous vide avant l'utilisation.

2. Bac sanitaire pour chat selon la revendication 1, **caractérisé en ce que** la couche de revêtement en matériau non tissé (7) comprend un matériau très absorbant.

3. Bac sanitaire pour chat selon la revendication 1 ou 2, **caractérisé en ce que** la couche de revêtement en matériau non tissé (7) comprend un matériau absorbeur d'odeur.

4. Bac sanitaire pour chat selon l'une quelconque des revendications précédentes, **caractérisé en ce que** la couche de revêtement en matériau non tissé (7) est inrayable, au moins sur sa surface supérieure.

5. Bac sanitaire pour chat selon l'une quelconque des revendications précédentes, **caractérisé en ce que** la couche de revêtement en matériau non tissé (7) a des dimensions externes correspondant sensiblement du point de vue de la forme aux dimensions internes de la partie inférieure (2).

6. Bac sanitaire pour chat selon l'une quelconque des revendications précédentes, **caractérisé en ce que** la couche de revêtement en matériau non tissé (7) a une épaisseur comprise entre 0,1 et 1 cm, de préférence 0,5 cm.

7. Bac sanitaire pour chat selon l'une quelconque des revendications précédentes, **caractérisé en ce que** la couche de litière (8) a une épaisseur comprise entre 1 et 3 cm, de préférence 2 cm.

8. Bac sanitaire pour chat selon l'une quelconque des revendications précédentes, **caractérisé en ce que** la partie inférieure (2) se présente sous la forme d'une cuvette rectangulaire ouverte.

9. Bac sanitaire pour chat selon l'une quelconque des revendications précédentes, **caractérisé en ce que** le récipient (3) peut être ouvert de sorte que ses extrémités supérieures (9), après qu'il ait été placé dans la partie inférieure (2), peuvent être dépliées sur le bord périphérique supérieur de la partie inférieure (2), et après que la période d'utilisation est terminée, repliées ensemble à nouveau pour refermer le récipient.

10. Bac sanitaire pour chat selon la revendication 9, **caractérisé en ce que** l'extrémité (9) du récipient (3) peut être fixée sur le bord périphérique supérieur de la partie inférieure (2).

11. Bac sanitaire pour chat selon la revendication 9 ou la revendication 10, **caractérisé en ce qu'**il comprend une partie supérieure (10) qui peut être placée de manière amovible sur la partie inférieure (2) après que les extrémités (9) du récipient (3) ont été dépliées, ladite partie supérieure (10) recouvrant le bord périphérique supérieur de la partie inférieure (2) et fixant les extrémités (9) dépliées du récipient (3) sur le bord périphérique supérieur de la partie inférieure (2).

12. Bac sanitaire pour chat selon la revendication 11, **caractérisé en ce que** la partie supérieure (10) est conçue sous la forme d'un cadre rectangulaire.

13. Bac sanitaire pour chat selon l'une quelconque des revendications précédentes, **caractérisé en ce qu'**il comprend au moins un moyen de fermeture (5) pour refermer le récipient (3) après usage.

14. Bac sanitaire pour chat selon la revendication 13, **caractérisé en ce que** le moyen de fermeture (5) comprend des bandes adhésives ou un ruban adhésif.

15. Bac sanitaire pour chat selon l'une quelconque des revendications précédentes, **caractérisé en ce qu'**il comprend une boîte de stockage (12) séparée pour contenir un certain nombre de récipients (3).

16. Bac sanitaire pour chat selon la revendication 15, **caractérisé en ce qu'**il comprend un couvercle (13) sur la boîte de stockage (12) avec une ouverture (14) pour le retrait.

17. Bac sanitaire pour chat selon la revendication 15 ou la revendication 16, **caractérisé en ce que** les sacs tubulaires (3) sont prévus sous la forme d'un rouleau d'alimentation (15) dans la boîte de stockage (12) et sont susceptibles d'être séparés au moyen d'une bande de déchirement (16) et d'être retirés individuellement via une ouverture de retrait (14).
